(19) Europäisches Patentamt
European Patent Office
Office européen des brevets

(11) **EP 3 151 394 B1**

(12) **EUROPEAN PATENT SPECIFICATION**

(45) Date of publication and mention
of the grant of the patent:
**22.07.2020 Bulletin 2020/30**

(21) Application number: **14893257.7**

(22) Date of filing: **26.05.2014**

(51) Int Cl.:
*H02K 11/00* (2016.01)  *H02H 7/085* (2006.01)
*H02K 5/20* (2006.01)  *H02K 9/04* (2006.01)
*H02K 9/06* (2006.01)  *H02P 27/06* (2006.01)
*H02K 11/33* (2016.01)  *H02K 11/25* (2016.01)
*H02K 5/22* (2006.01)

(86) International application number:
**PCT/JP2014/063770**

(87) International publication number:
**WO 2015/181868 (03.12.2015 Gazette 2015/48)**

(54) **ROTATING ELECTRIC MACHINE ASSEMBLY BODY**

MONTAGEKÖRPER FÜR ELEKTRISCHE DREHMASCHINE

CORPS D'ENSEMBLE DE MACHINE ÉLECTRIQUE ROTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2017 Bulletin 2017/14**

(73) Proprietor: **Hitachi Industrial Equipment Systems
Co., Ltd.**
**Tokyo 101-0022 (JP)**

(72) Inventors:
• **OKUBO, Tomofumi**
**Tokyo 101-0022 (JP)**
• **TOMITA, Toshio**
**Tokyo 101-0022 (JP)**

(74) Representative: **Mewburn Ellis LLP
Aurora Building
Counterslip
Bristol BS1 6BX (GB)**

(56) References cited:
**EP-A1- 2 239 832**    **EP-A2- 2 482 428**
**EP-A2- 2 549 629**    **WO-A1-2014/076787**
**JP-A- H1 169 836**    **JP-A- H1 169 836**
**JP-A- H06 315 248**    **JP-A- H11 311 196**
**JP-A- 2000 166 177**    **JP-A- 2000 166 177**
**JP-A- 2004 166 341**    **JP-A- 2008 042 956**
**JP-A- 2008 042 956**    **JP-A- 2008 048 511**
**JP-A- 2009 197 602**    **JP-A- 2011 182 480**
**JP-A- 2013 027 181**    **JP-U- S62 182 050**
**US-A1- 2003 048 085**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a rotating electric machine which is used for driving various apparatuses, for example, for driving a pump, and more particularly to suppression control and protection against temperature rise in a rotating electric machine assembly body having a structure configured such that a rotating electric machine is integrated with an inverter (hereinafter referred to as "power conversion device"), and various circuit boards, capacitors, noise filters, and the like.

BACKGROUND ART

In a pump that is independently installed in an outdoor location, a rotating electric machine for driving the pump is also independently installed. For this reason, in general, the rotating electric machine is, together with the rotating electric machine body, configured as, so-called, a rotating electric machine assembly body in which an inverter for supplying a drive current to the rotating electric machine, a control board including a microcomputer, and an internal/external interface of a wired/wireless type, to perform various kinds of operation control, a noise filter with an anti-surge circuit, and a DC reactor are arranged in an all-in-one manner.

In general, a structure is known, in which a thermal relay is provided in an electric motor, and in which, when the temperature in the motor reaches a predetermined temperature, the power supply to the motor is intercepted to prevent burning of the motor (see Patent Literature 1).

Further, a method is known, in which an inverter is provided with a thermal function, and in which, when it is detected that the temperature in the inverter reaches a predetermined temperature, the output of the inverter is reduced to suppress heat generation (see Patent Literature 2).

CITATION LIST

PATENT LITERATURE

    PATENT LITERATURE 1: JP-A-6-178442
    PATENT LITERATURE 2: JP-A-9-9684
    PATENT LITERATURE 3 JP 2008 042956 A
    PATENT LITERATURE 4: JP H11 69836 A

SUMMARY OF INVENTION

TECHNICAL PROBLEM

However, in the combination of the electric motor and the inverter using the prior art described above, temperature detection means needs to be provided in each of the electric motor and the inverter, and further, a cooling apparatus, such as a cooling fan, needs to be provided in each of the electric motor and the inverter, as a result of which the number of components is increased, and the structure is complicated. Further, since the amount of temperature rise of the electric motor is not completely coincident with to the amount of temperature rise of the inverter, the control method for cooling the electric motor and the inverter is complicated.

The present invention has been made in view of the above-described problems in the prior art. An object of the present invention is to reduce the number of components used for temperature control and to facilitate the temperature control by thermally integrating an electric motor and an inverter.

SOLUTION TO PROBLEM

In order to achieve the above described object, the present invention provides a rotating electric machine assembly body including: a rotating electric machine including, for example, a housing, a stator attached to the housing, a rotator fixed to a rotary shaft, a bearing supporting the rotary shaft, and end brackets to which the bearing is attached; a power conversion device supplying a drive current to the armature of the electric machine; and a control board controlling the rotating electric machine via the power conversion device, the power conversion device and the control board being arranged at the outer peripheral section of the housing, wherein in the power conversion device includes a temperature detector in the region in which the power conversion device and the housing are in contact with each other, and when the temperature detected by the temperature detector is equal to or higher than a predetermined temperature, the control board lowers the frequency of AC power outputted from the power conversion device, and when a temperature detected by the temperature detector is less than a predetermined temperature, the control board increases a frequency of AC power outputted from the power conversion device to the specified frequency.

ADVANTAGEOUS EFFECTS OF INVENTION

With the present invention described above, it is possible to reduce the number of components for performing temperature control, and further, it is possible to thermally integrate the electric motor with the inverter to facilitate the temperature control.

BRIEF DESCRIPTION OF DRAWINGS

[FIG. 1] FIG. 1 is an external perspective view showing the entire configuration of a rotating electric machine assembly body.
[FIG. 2] FIG. 2 is a development perspective view showing the entire configuration of the rotating electric machine portion incorporated in the cover of the rotating electric machine assembly body.
[FIG. 3] FIG. 3 is a development perspective view showing each of components of the rotating electric machine assembly when the rotating electric machine assembly body is incorporated in the cover.
[FIG. 4] FIG. 4 is a partial cutting perspective view for explaining another example of the positional relationship between a power conversion device and a stator (armature) which are attached to a housing in the rotating electric machine assembly body.
[FIG. 5] FIG. 5 shows contents of memory stored in a control & I/F board (control circuit).
[FIG. 6] FIG. 6 shows contents of memory stored in a control & I/F board (control circuit).
[FIG. 7] FIG. 7 shows a flow of degeneracy operation control when high temperature is detected.
[FIG. 8] FIG. 8 shows a control flow of determination value TDG confirming process.
[FIG. 9] FIG. 9 shows a control flow of command speed subtraction process.
[FIG. 10] FIG. 10 shows a control flow of command speed addition process.
[FIG. 11] FIG. 11 shows a flow of degeneracy operation control when temperature is detected.
[FIG. 12] FIG. 12 shows a flow of degeneracy operation control when a temperature is outputted.
[FIG. 13] FIG. 13 shows a flow of degeneracy operation control when a temperature is outputted.
[FIG. 14] FIG. 14 shows a flow of life estimation control.
[FIG. 15] FIG. 15 is a view for explaining the temperature gradient.
[FIG. 16] FIG. 16 is a circuit configuration diagram of a power conversion device.

DESCRIPTION OF EMBODIMENTS

In the following, the detailed description of embodiments of the present invention will be described with reference to the accompanying drawings.

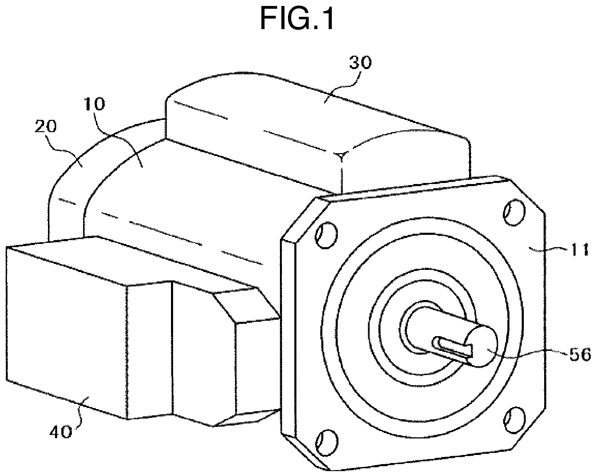

First, in FIG. 1, an entire configuration of a rotating electric machine assembly body for driving, for example, an outdoor installation pump is shown as an embodiment of the present invention. Reference numeral 10 denotes a cover which covers the outer periphery of the rotating electrical machine body and which has a substantially cylindrical outer shape. The cover 10 is configured in such a way that a plate-like resonance suppressing material is formed into a predetermined shape, for example, by pressing processing. More specifically, a sound-absorbing material, a soundproof material, a vibration-damping material, a vibration proofing material, and the like, are attached to the inside of the cover, so that noise and vibration can be suppressed.

A cooling cover 20 provided therein with a centrifugal fan 58 described below is attached at one end portion (back side in FIG. 1) in the axial direction of the cylindrical cover 10. Further, an end bracket 11 of a rotating electric machine described below is attached at the other end portion (front side in FIG. 1 and load side). Further, a case (power conversion device case) 30 accommodating therein a power conversion device and a terminal box 40 (which are described below) are respectively attached to the outer peripheral surface of the cylindrical cover 10.

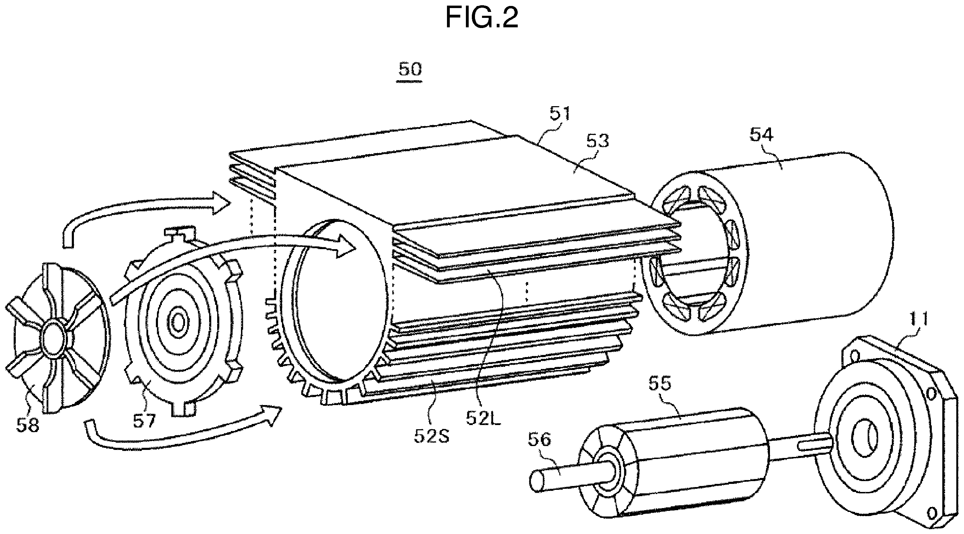

FIG. 2 is a development view showing a configuration of a rotating electric machine 50 incorporated in the cover 10. In the present embodiment, a permanent-magnet-type rotating electric machine is used as an example of the rotating electric machine 50. Reference numeral 51 denotes a substantially cylindrical housing (or, also referred to as "frame"), and the housing 51 is formed by extruding a material, such aluminium, having excellent heat conductivity.

Further, many cooling fins 52L and 52S are formed on the outer peripheral surface of the housing 51 to extend in parallel along the cylindrical rotary shaft. Further, a plane 53, which has a relatively large area and to which the power conversion device case described above (that is, the power conversion devices case) 30 is attached, is formed on a part of the outer peripheral surface of the housing 51 (upper portion in FIG. 2), and the relatively large (elongated) cooling fins 52L extending in the horizontal direction are formed on the periphery of the plane 53.

It should be noted that an armature, which configures a stator 54 of the permanent-magnet-type rotating electric machine, is inserted and fixed in the cylindrical housing 51, and also a rotor 55, which is configured by cylindrically arranging a plurality of permanent magnets, is inserted and attached rotatably in the cylindrical inner space of the stator 54 via a predetermined gap with respect to the stator 54. Further, in FIG. 2, reference numeral 56 denotes a rotary shaft which is formed integrally with the rotor 55, and the rotational driving force of the rotating electric machine is transmitted to a driven machine, such as for example, a pump, via the rotary shaft 56. Further, in FIG. 2, reference numeral 57 denotes an end bracket attached to an end portion of the housing 51 on the opposite side to the end bracket 11. Further, in FIG. 2, reference numeral 58 denotes a centrifugal fan (cooling fan) which is attached to the rotary shaft 56 on the outer side of the end bracket 57.

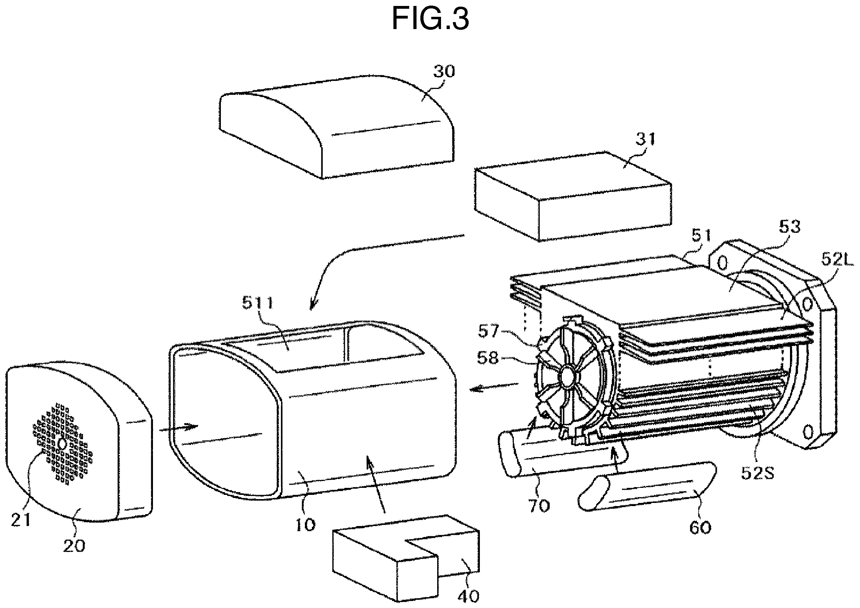

FIG. 3 is a development view showing each component when the rotating electric machine 50 is accommodated in the cover 10 shown in FIG. 1. That is, in the example of FIG. 3, a case 60 for a control & I/F board and a case 70 for a smoothing capacitor, each of which has an outer cross section of a substantially arc shape, are respectively attached to portions on the outer peripheral surface of the housing 51 of the rotating electric machine 50, for example, lower peripheral portions on which relatively short cooling fins 52 are formed. Then, the rotating electric machine 50 is inserted into the inside of the cover 10 (see the arrow in FIG. 3). Further, a power conversion device 31, in which power switching elements (for example, IGBTs, or the like) serving as heat generating elements and configuring an inverter, and a temperature detector are provided at portions of power conversion device 31, is attached to the plane 53 of the housing 51 via an opening 511 provided in a part of the cover 10. Then, the cover (cover for the power conversion devices) 30 for protection is attached to the outside of the power conversion device 31. Further, the terminal box 40 is attached to a part of the outer peripheral surface of the housing 51 (see the arrow in FIG. 3). Then, the cooling cover 20 is attached to another end portions (left end in FIG. 3) of the housing 51. Further, reference numeral 21 in FIG. 3 denotes many small holes which are formed in a mesh shape in a substantially central portion of the wall surface of the cooling cover 20 to take in outside air.

That is, in the rotating electric machine assembly body including the rotating electric machine body and the peripheral devices of the rotating electric machine body, when the centrifugal fan 58 attached at the distal end of the rotary shaft 56 is rotated by the rotation of the rotary shaft 56 according to the operation of the rotating electric machine, the outside air is introduced to the inside of cover 10 and flows between the many cooling fins 52 formed on the outer peripheral surface of the housing 51 to perform heat exchange (see white arrows in FIG. 2). Then, the air introduced from the outside flows out to the outside through the gap between the housing 51 and the end bracket 11 attached on the other end. That is, the housing 51, which has the many cooling fins 52 formed on the outer peripheral surface thereof, is cooled by the air flow generated by the rotation of the centrifugal fan 58.

It should be noted that, as described above, in order to discharge heat generated in the rotating electric machine, the power conversion device 31 is attached directly to a part of the housing 51 provided integrally with the outer periphery of the stator 54, that is, the planar section 53 for attaching the power conversion device 31. Thereby, the power conversion device 31 is thermally integrated with the housing 51 formed of a material excellent in thermal conductivity, as a result of which the temperature of the power conversion device 31 and the temperature of the housing 51 can be integrally controlled by the temperature detector provided in the power conversion device 31.

Especially, in the above-described embodiment, the peripheral portion of the attachment plane 53, which is formed at the upper portion of the cylindrical housing 51 and on which the power conversion device 31 is arranged, is formed thinner than the other portions, and hence, the power conversion device 31 and the housing 51 are more thermally integrated with each other.

Further, as described above, according to the present invention, each of the case 60 for the control & I/F board, and the case 70 for the capacitor are also attached to a part of the outer peripheral surface of the housing 51. Therefore, in the same manner as described above, heat generated in the cases can be efficiently discharged to the outside via the cooling fins 52 formed in the outer periphery of the housing 51.

Further, as described above, according to the present invention, the case 60 for the control & I/F boards and the case 70 for the capacitor are also attached (fixed) to a part of the outer peripheral surface of the housing 51. Therefore, the temperature of the cases can be estimated from the thermal conductivity of the material forming the housing by using the temperature detector provided in the power conversion device 31. Further, the life estimation of each component, especially a capacitor, can be accurately performed from the detected temperature.

It should be noted that the case 60 for the control & I/F board incorporates therein a controller for control (a control board, a control circuit, a control microcomputer) and also a communication I/F board. Also, the case 60, into which a resin material, or the like, is injected, has excellent environmental resistance and shock resistance. Further, the case 60 for control & I/F boards is attached to a portion of the rotating electric machine, and hence driving and control of the outside installation pump, and also communication with the outside can be carried out wirelessly or by wire. In this configuration, for example, when a pressure sensor, a flow rate sensor, and the like, are mounted in the control & I/F board, automatic control can be performed by using the amounts of pressure, flow, and the like, as feedback signals, and further, a centralized control system, an integrated energy-saving monitoring system, and the like, can be realized by transmitting the signals to a support sensor (and communicating with the support sensor). That is, with this configuration, it is possible to perform operation control, energy-saving operation, and the like, of the outside installation pump. Also, it is possible to realize remote monitoring and control, centralized control, and further, it is possible to realize a systemization with a plurality of pumps.

Further, a smoothing capacitor configuring a part (component) of the inverter circuit of the power conversion device 31 is accommodated in the case 70 for the capacitor. Also, in the same manner as described above, a resin material, or the like, is injected into the case 70, so that the environmental resistance and shock resistance of the case 70 are improved. Further, in the present embodiment, it is described that a DC reactor configuring a component of the inverter is incorporated into a portion of the power conversion devices 31, but similarly, the DC reactor may be incorporated into a dedicated case which is attached to a portion of the outer peripheral surface of the housing 51.

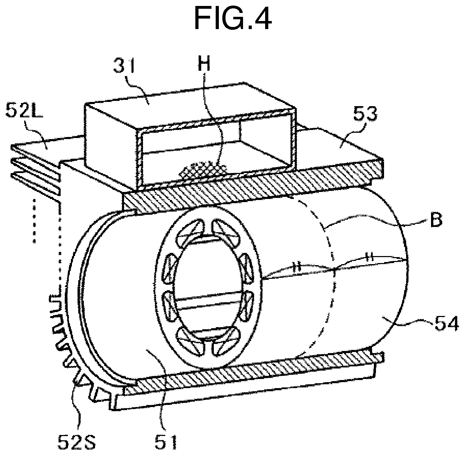

In addition, in the present invention, instead of the above-described embodiment, for example, as shown also in FIG. 4, at a portion of the planar section 53 of the cylindrical housing 51 along the rotation center axis of the power conversion device 31, the heat generating portion (mesh portion in FIG. 4) H in the power conversion device 31 is arranged to coincide with the position of the center portion (shown by the broken line B in FIG. 4) of the stator (armature) 54 as the heat generating portion on the side of the rotating electric machine. When the temperature detector is provided for temperature control in the region in which the power conversion device 31 is in contact with the housing 51, the power conversion device 31 and the housing 51 are more thermally integrated with each other, so that the accurate temperature control can be performed.

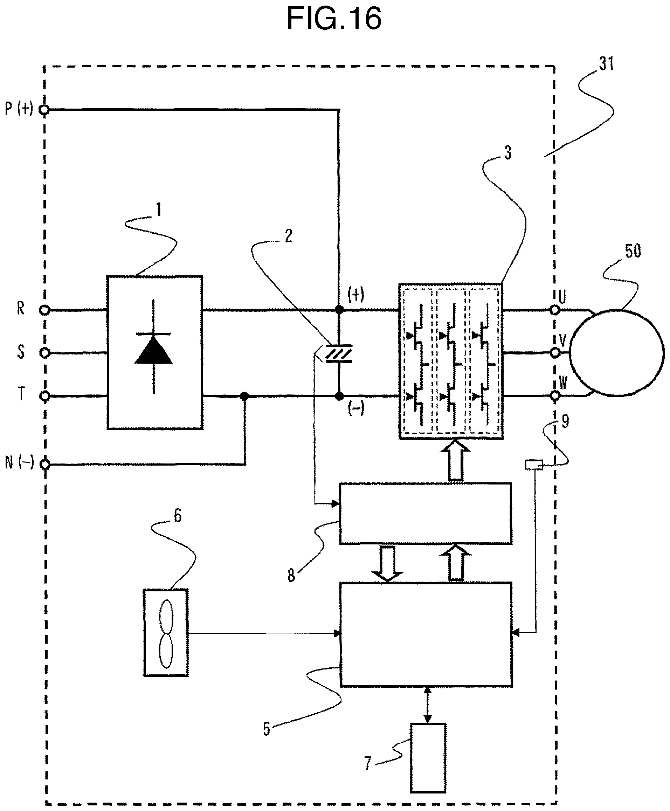

FIG. 16 is a circuit configuration diagram of the power conversion device 31 in the present invention. Inputted AC power is converted into DC power by a forward converter 1. The converted DC power is smoothed by a smoothing capacitor 2 and is then converted into AC power with arbitrary frequency by a reverse converter 3 including power switching elements. Then, the AC power with arbitrary frequency is supplied to the rotating electric machine 50. The reverse converter is driven by a driving circuit 8. Temperature information detected by a temperature detector 9 is inputted into a control circuit 5, and the driving circuit 8 is controlled by a command from the control circuit 5, to increase or decrease the speed of the electric motor. Various setting can be performed by an operation display section 7 connected to the control circuit 5. Further, a second air cooling fan 6, which is not interlocked with the operation of the electric motor, is rotationally driven independently of the rotary shaft and controlled by the control circuit 5.

It should be noted that the smoothing capacitor 2 is housed in the case 70 for the capacitor, and the control circuit 5 is housed in the case for the control & IF board, which cases are arranged at a position separated from the case 30 for the power conversion devices in the configuration of the rotating electric machine 50.

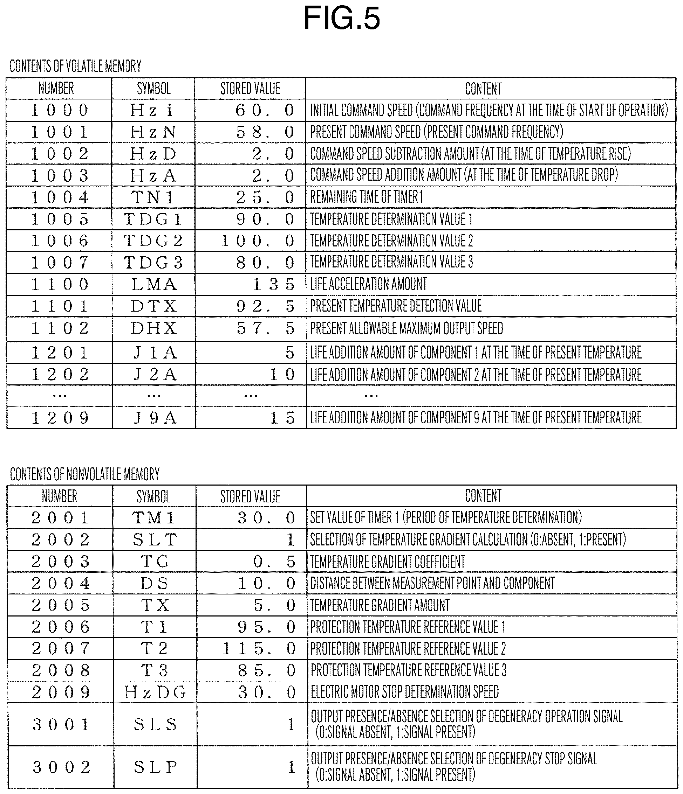

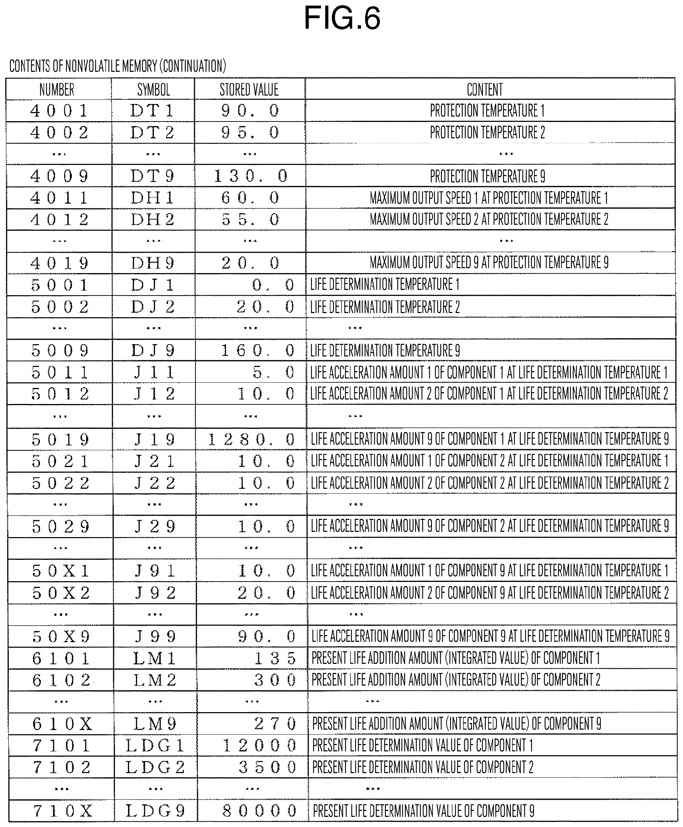

FIG. 5 and FIG. 6 show contents of a nonvolatile memory and contents of a volatile memory, which are stored in a storage section of a control circuit in the control & I/F board. It should be noted that, without providing the storage section in the control & I/F board, a storage device may be externally provided and used instead of the storage section.

At address 1000 in the volatile memory, initial command speed (command frequency at the time of start of operation) Hzi is stored. At address 1001, present command speed (present command frequency) HzN is stored. At address 1002, a command speed subtraction amount HzD at the time of temperature rise is stored. At address 1003, a command speed addition amount HzA at the time of temperature drop is stored. At address 1004, the remaining time TN1 of a timer for setting a period, in which temperature determination process is performed, is stored. At address 1005 to address 1007, TDG1 to TDG3 which are temperature determination values 1 to 3 are stored. At address 1100, a life acceleration amount LMA is stored.

At address 2001 in the nonvolatile memory, a periodic TM1, in which temperature determination process is performed, is stored in advance. At address 2002, a parameter SLT for determining whether or not temperature gradient calculation is performed is stored in advance. At address 2003, a temperature gradient coefficient TG is stored in advance. At address 2004, a distance DS between a measurement point and a target component is stored in advance. At address 2005, a temperature gradient amount TX, which is obtained by calculation using the temperature gradient coefficient TG and the distance DS between the measurement point and the target component, is stored. At address 2006 to address 2008, T1 to T3, which are protection temperature reference values 1 to 3, are stored in advance.

At address 3001, a parameter SLS is stored in advance, which parameter is used for selecting whether or not a signal indicating that the degeneracy operation is performed is outputted while the degeneracy operation is performed. At address 3002, a parameter SLP is stored in advance, which parameter is used for selecting whether or not output a signal indicating that the electric motor is stopped when the electric motor is stopped due to temperature rise or according to the result of degeneracy operation.

At address 4001 to address 4019, data about the maximum output speed allowed for temperature detection values are stored in advance. At address 5001 to address 50X9, life acceleration amounts of component 1, component 2, ..., component X for a temperature detection value are stored in advance. At address 6101 to address 610X, the present life addition amounts (integrated values) of component 1, component 2, ..., component X are stored.

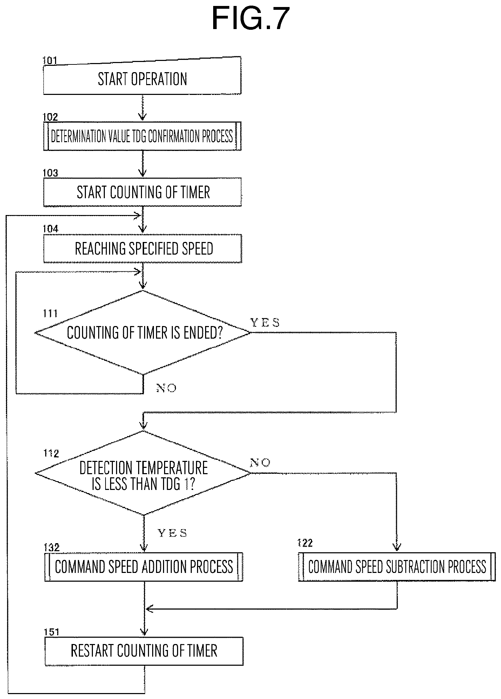

FIG. 7 shows a flow of control of the present invention. After the operation is started in step 101, the process of confirming determination values TDG1 to TDG3 (determination value TDG confirmation process) is performed in step 102. In step 103, the set value of temperature determination period of timer TM1 stored beforehand at address 2001 in the nonvolatile memory is stored in remaining time TN1 of timer 1 at address 1004 in the volatile memory, and the countdown of TN1 is started. After the speed of the electric motor reaches a specified speed in step 104, in step 111, when the counting of timer TN1 is not completed, the process waits until the counting of timer TN1 is completed. When the counting of timer TN1 is completed, it is determined in step 112 whether or not the temperature detected by the temperature detector is less than the temperature determination value 1 stored at address 1005 in the volatile memory. Here, in step 104, it is also possible to start the above-described determination by omitting the process for determining that the speed of the electric motor reaches the specified speed. When the detected value is less than the temperature determination value 1, the command speed addition process is performed in step 132, and the counting of the timer is restarted in step 151, and then the process returns to step 104. On the contrary, when the detected value is the temperature determination value 1 or more, the command speed subtraction process is performed in step 122, and the counting of the timer is restarted in step 151, and then, the process returns to step 104.

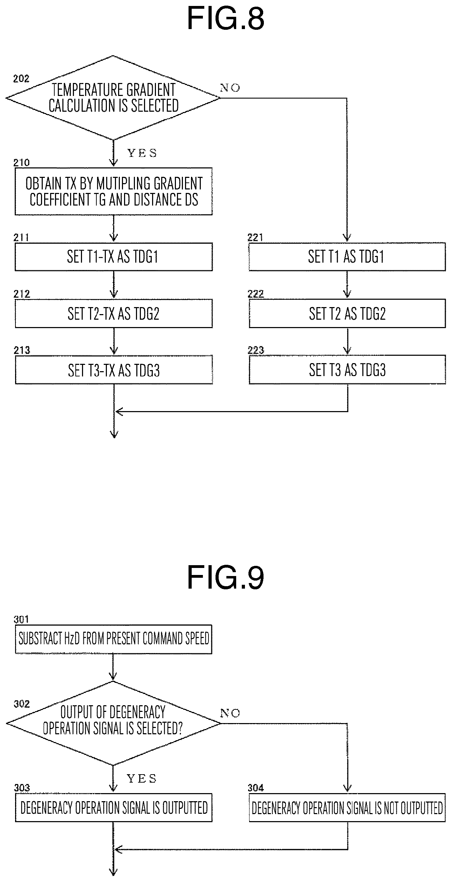

FIG. 8 shows the details of the determination value TDG confirmation process in step 102. In step 202, the parameter SLT for selecting whether or not temperature gradient calculation process is stored beforehand at address 2002 in the nonvolatile memory is confirmed. When SLT is set to 0, it is determined that the temperature gradient calculation process is not stored, and then, the process proceeds to step 221.

In step 221 and subsequent processes, the temperature gradient calculation is not performed. In step 221, the protection temperature reference value 1 (T1) stored beforehand at address 2006 in the nonvolatile memory is stored as the temperature determination value 1 (TDG1) at address 1005 in the volatile memory. Similarly, in step 222, the protection temperature reference value 2 (T2) stored beforehand at address 2007 in the nonvolatile memory is stored as the temperature determination value 2 (TDG2) at address 1006 in the volatile memory. In step 223, the protection temperature reference value 3 (T3) stored beforehand at address 2008 in the nonvolatile memory is stored as the temperature determination value 3 (TDG3) at address 1007 in the volatile memory. Then, the process proceeds to step 103.

When SLT is set to 1, it is determined that the temperature gradient calculation is stored, and the process proceeds to step 210. In step 210, the temperature gradient coefficient TG stored beforehand at address 2003 in the nonvolatile memory is multiplied by the distance DS between the measurement point and the component, which distance is stored beforehand at address 2004 in the nonvolatile memory. The multiplication result is stored as the temperature gradient amount TX at address 2005 in the nonvolatile memory.

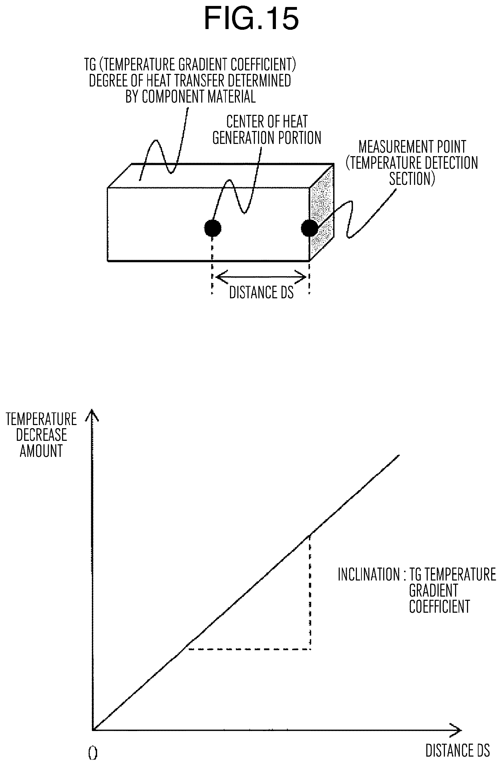

As shown in FIG. 15, TG is a temperature gradient coefficient of a material, which coefficient represents heat conduction capability (thermal conductivity) of the material. DS is a distance from the center of a heat generating portion to a measurement point or the temperature detecting section. TG and DS can be obtained from design values. Further, TX may be obtained from difference (temperature fall) between actual temperature and detected temperature which are obtained from an actual test of a material.

In step 211 and subsequent processes, the temperature gradient amount is taken into account in the temperature determination value, and the value, which is obtained by subtracting the temperature gradient amount from the protection temperature reference value 1 (T1) stored beforehand at address 2006 in the nonvolatile memory, is set as the temperature determination value 1 (TDG1) at address 1005 in the volatile memory.

Similarly, in step 212, the value, which is obtained by subtracting the temperature gradient amount from the protection temperature reference value 2 (T2) stored beforehand at address 2007 in the nonvolatile memory, is set as the temperature determination value 2 (TDG2) at address 1006 in the volatile memory. Similarly, in step 213, the value, which is obtained by subtracting the temperature gradient amount from the protection temperature reference value 3 (T3) stored beforehand at address 2008 in the nonvolatile memory, is stored as the temperature determination value 3 (TDG3) at address 1007 in the volatile memory. Then, the process proceeds to step 103.

FIG. 9 shows the details of the command speed subtraction process in step 122. In step 301, the command speed reduction amount HzD at the time of temperature rise stored at address 1002 in the volatile memory is subtracted from the present command speed HzN stored at address 1001 in the volatile memory, and the obtained result is newly stored as the present command speed HzN at address 1001 in the volatile memory. In step 302, the parameter SLS is confirmed, which selects the presence or absence of the output of degeneracy operation signal set beforehand at address 3001 in the nonvolatile memory. When SLS is set to 0, the degeneracy operation signal is not outputted in step 304, and the process proceeds to step 151. When SLS is set to 1, the degeneracy operation signal is outputted in step 303, and the process proceeds to step 151.

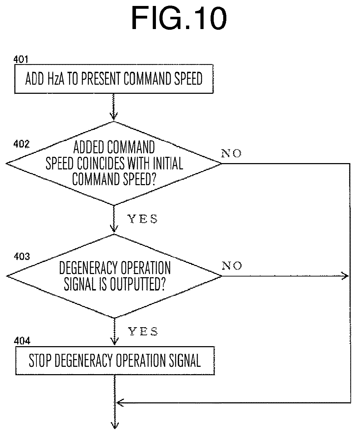

FIG. 10 shows the details of the command speed addition process in step 132. In step 401, the command speed calculation amount HzA at the time of temperature drop and stored at address 1003 in the volatile memory is added to the present command speed HzN stored at address 1001 in the volatile memory, and the addition result is newly stored as the present command speed HzN at address 1001 in the volatile memory.

In step 402, the present command speed HzN is compared with the initial command speed Hzi stored at address 1000 in the volatile memory. As a result, when the present command speed HzN is coincident with the initial command speed Hzi, the process proceeds to step 403. When the present command speed HzN is not coincident with the initial command speed Hzi, the process proceeds to step 151.

In step 403, it is confirmed whether or not the degeneracy operation signal is outputted at present. As a result, when the degeneracy operation signal is outputted, the output of the degeneracy operation signal is stopped in step 404, and the process proceeds to step 151. When the degeneracy operation signal is not outputted, the process proceeds to step 151.

Further, when the degeneracy operation signal is outputted from the control circuit 5, it can be recognized that the power conversion device is in a high temperature state, and thereby a warning, such as a warning display, can be issued by the operation display section 7.

For example, in the pump, when the frequency is lowered, it is estimated that the temperature is lowered. However, when the frequency is lowered, there is a case where the output (pressure, and flow rate/discharge water amount) is reduced so that sufficient work cannot be performed. In this case, when the above-described warning is issued, it is possible to perform maintenance in advance before the pump is completely failed.

The subtraction and addition amounts of the command speed may be changed according to the temperature. In this case, the temperature and the subtraction amount and the addition amount respectively corresponding to the temperature are stored beforehand in the nonvolatile memory. Then, the command speed subtraction amount HzD stored at address 1002 in the volatile memory, and the command speed addition amount HzA stored at address 1003 in the volatile memory are updated according to the temperature detected by the temperature detector, and the updated subtraction amount and addition amount are newly stored.

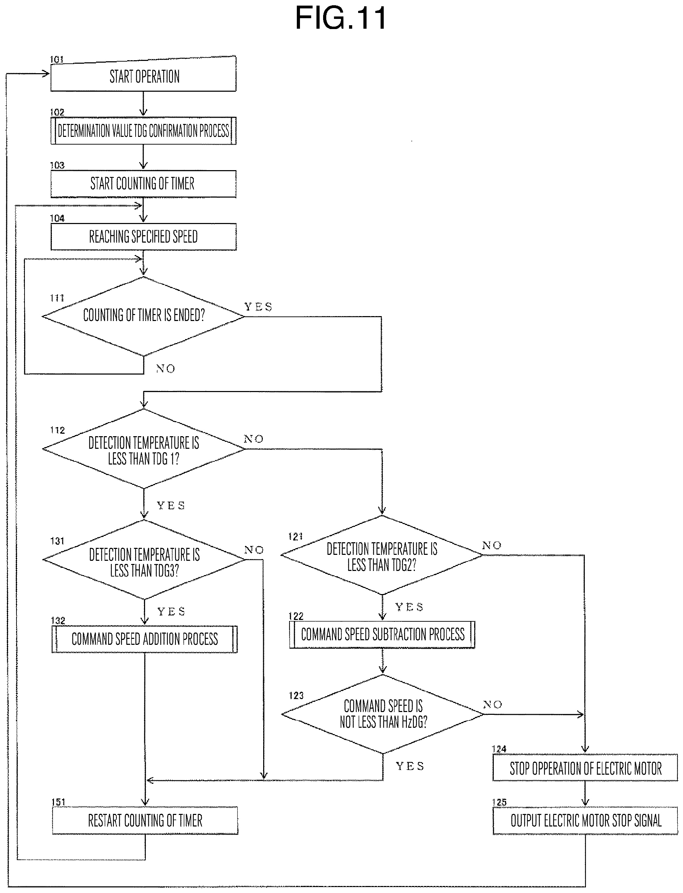

It is desirable that a plurality of temperature determination values are set to have a hysteresis characteristic. Further, it is known that, when a load having a square reduction torque characteristic is operated, almost no work is performed in the low-speed range. Therefore, it is desirable that the control circuit 5 is provided with a function of stopping the operation of the electric motor when the speed of the electric motor is less than a predetermined speed as a result of the degeneracy operation. FIG. 11 shows an example in which a plurality of temperature determination values are provided, and in which, when the temperature of the electric motor exceeds the second determination value, or when the speed of the electric motor is lower than a predetermined speed, the operation of the electric motor is stopped.

The steps before step 112 are the same as the steps in FIG. 7, and hence the description thereof will be omitted. In step 112, it is determined whether or not the temperature detected by the temperature detector is less than the temperature determination value 1 (TDG1) stored at address 1005 in the volatile memory. When detection value is less than temperature determination value 1 (TDG1), it is determined in step 131 whether or not the temperature detected by the temperature detector is less than the temperature determination value 3 (TDG3) stored at address 1007 in the volatile memory. When detection value is less than the temperature determination value 3 (TDG3), the command speed addition process is performed in step 132, and the counting of the timer is resumed in step 151, and then, the process returns to step 104. On the contrary, in step 131, when the detection value is not less than the temperature determination value 3 (TDG3), the counting of the timer is resumed in step 151, and then, the process returns to step 104.

In step 112, when the detection value is not less than the temperature determination value 3 (TDG3), it is determined in step 121 whether or not the temperature detected by the temperature detector is less than the temperature determination value 2 (TDG2) stored at address 1006 in the volatile memory. When the detection value is less than temperature determination value 2 (TDG2), the command speed subtraction process is performed in step 122. Then, in step 123, it is determined whether or not the present command speed HzN stored at address 1001 in the volatile memory is not less than the electric motor stop determination speed HzDG stored at address 2009 in the nonvolatile memory. When the present command speed HzN is not less than the electric motor stop determination speed HzDG, the counting of the timer is resumed in step 151, and then, the process returns to step 104.

When the detection value is not less than the temperature determination value 2 in step 121, or when the present command speed HzN is less than the electric motor stop determination speed HzDG in step 123, the operation of the electric motor is stopped in step 124, and the electric motor stop signal is outputted in step 125, and then, the process returns to step 101. Here, the operation state of the electric motor can be maintained at the speed HzDG without stopping the electric motor in step 124. In this case, the counting of the timer is resumed in step 151, and then the process returns to step 104.

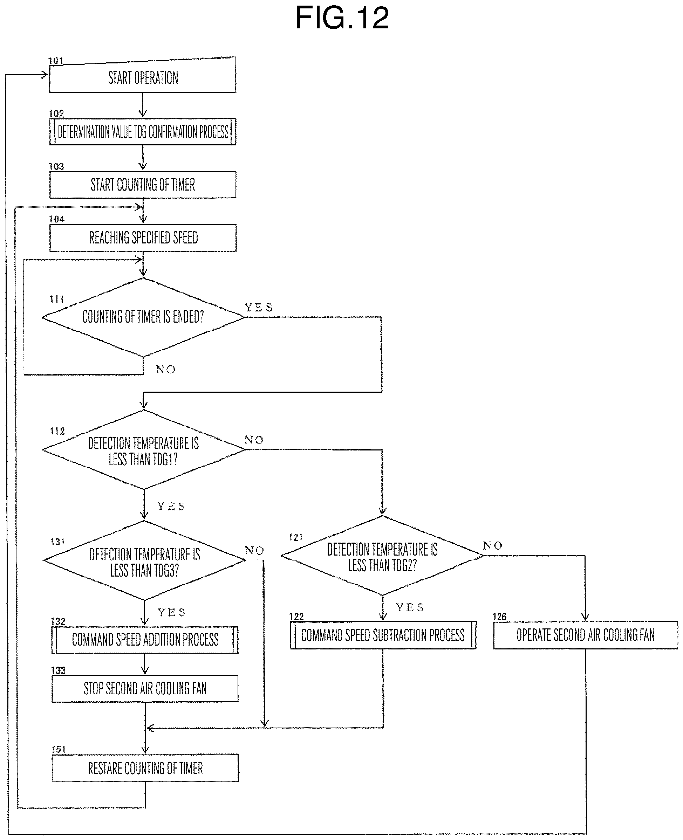

When the detection value is more than a predetermined temperature, a second air cooling fan, which can be rotationally driven independently of the rotary shaft of the electric motor, can also be operated in no conjunction with the operation of the electric motor. In this case, it is desirable that a plurality of temperature determination values are provided in order to reduce the number of times of start and stop of the second air cooling fan. FIG. 12 shows an example in which, when a plurality of temperature determination values are provided, and when the detection value is more than the second determination value, the second air cooling fan is rotationally driven independently of the rotary shaft.

Only the difference between FIG. 12 and FIG. 11 will be described. In step 132, the command speed addition process is performed, and then, the second air cooling fan is stopped. When the temperature detected by the temperature detector is less than the temperature determination value 2 in step 121, the command speed subtraction process is performed in step 122, and then, the counting of the timer is resumed in step 151, and then, the process returns to step 104. When the detection value is not less than the temperature determination value 2 in step 121, the second air cooling fan is operated in step 126, and the counting of the timer is resumed in step 151, and then, the process returns to step 104.

It is desirable that the position of the second air cooling fan is separated from the centrifugal fan 58 because the centrifugal fan 58 serves as a resistance. Specifically, the second air cooling fan is installed between the housing 51 and the end bracket 11, or is installed on the load side on the plane 53 on which the power conversion device 31 is arranged.

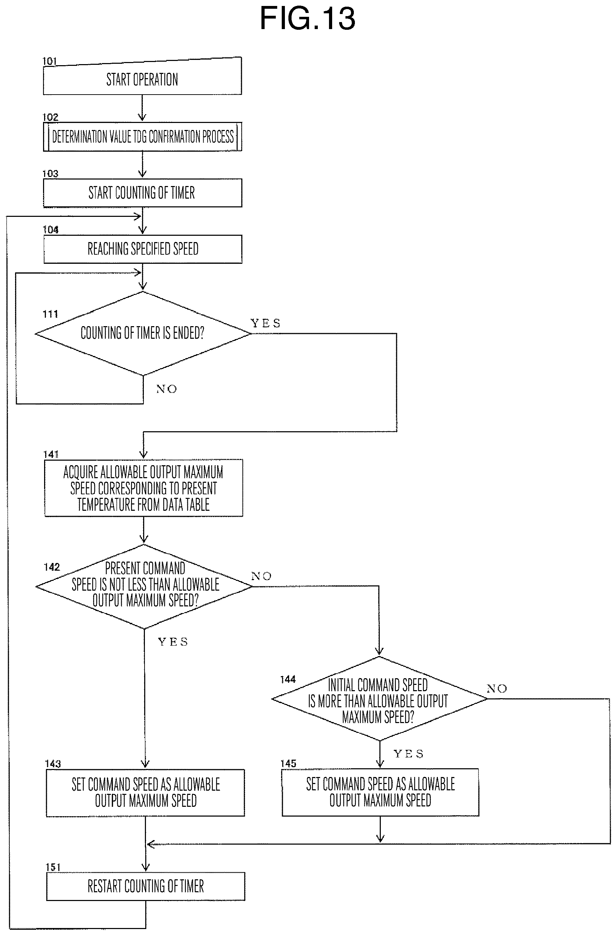

As a method of degeneracy operation, it is possible that the upper limit value of the command speed is acquired from the data table according to the temperature detected by the temperature detector, and that the operating speed (the number of rotation of the electric motor) is restricted based on the acquired upper limit value. FIG. 13 shows an example in which the operating speed is restricted according to the temperature detected by the temperature detector.

The steps before step 111 are the same as the steps in the other examples in the present invention, and hence the description thereof will be omitted. In step 141, the maximum output speed DHX allowable at the temperature detected by the temperature detector is acquired from the data table at address 4001 to address 4019 in the nonvolatile memory. When there is no data completely coincident with the temperature detection value in the data table at address 4001 to address 4009 in the nonvolatile memory, it is desirable that an approximate value of the temperature detection value is obtained by calculation of the following Expression 1 using two data in the data table which are most close to the temperature detection value. For example, when the temperature detection value is 92.5°C, DHX is calculated by the following Expression 1 using the data of (DT1) and (DT2) respectively stores at address 4001 and address 4002 in the nonvolatile memory, and the data of (DH1) and (DH1) respectively stores at address 4011 and address 4012 in the nonvolatile memory and respectively corresponding to the data of (DT1) and (DT2). Then, the obtained DHX is stored at address 1102 in the volatile memory.

$$DHX = (DH2 - DH1) \times (DT2 - DT1) + DH1 \qquad ... \text{Expression 1}$$

In step 142, it is determined whether or not the present command speed HzN stored at address 1001 in the volatile memory is not less than DHX stored at address 1102 in the volatile memory. When the present command speed HzN is not less than the maximum speed DHX, in step 143, DHX is again stored as the newly present command speed HzN at address 1001 in the volatile memory, and the counting of the timer is resumed in step 151, and then, the process returns to step 104.

When the present command speed HzN is less than the maximum speed DHX, it is determined in step 144 whether or not the initial command speed Hzi stored at address 1000 in the volatile memory is not less than DHX stored at address 1102 in the volatile memory. When the present command speed HzN is not less than the maximum speed DHX, in step 145, DHX is newly stored as the present command speed HzN at address 1001 in the volatile memory, and the counting of the timer is resumed in step 151, and then, the process returns to step 104. When the present command speed HzN is less than the maximum speed DHX, the command speed is not changed, and the counting of the timer is resumed in step 151, and then, the process returns to step 104.

In another embodiment of the present invention, in the state where the electric motor is stopped, when the temperature detected by the temperature detector is not less than a predetermined temperature, the operation of the electric motor is started. When the operation of the electric motor is performed, the rotating electric machine assembly body, which includes the rotating electric machine body and its peripheral devices, is operated such that the centrifugal fan 58, which is attached at the distal end of the rotary shaft 56 of the rotating electric machine, is rotated by the rotary shaft 56 rotated according to the operation of the rotating electric machine, and such that the outside air is introduced into the cover 10 to flow between many cooling fins 52 formed on the outer peripheral surface of the housing 51, so that heat exchange is performed (see white arrow of FIG. 2). Thereafter, the outside air, which is introduced into the cover 10, flows to the outside through the gap between the housing 51 and the end bracket 11 on the other end. That is, the housing 51, on the outer peripheral surface of which the many cooling fins 52 are formed, is cooled by the air flow generated by rotation of the centrifugal fan 58.

In the state where the rotating electric machine assembly body is placed outdoor in direct sunlight, even when the rotating electric machine assembly body is not operated, the temperature may become high. In the case when the temperature is high, when the rotating electric machine is intentionally operated, the cooling is performed by the centrifugal fan, and thereby the rotating electric machine assembly body is protected.

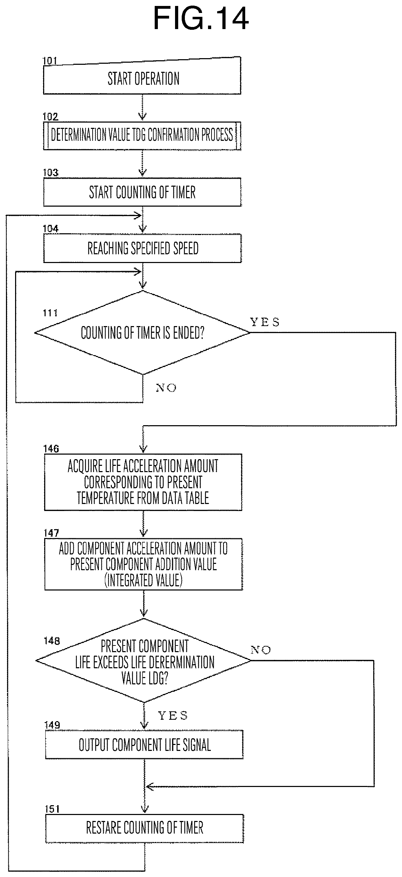

In yet another embodiment of the present invention, life estimation of each of the components is performed based on the temperature detected by the temperature detector. FIG. 14 shows this embodiment.

The steps before step 111 are the same as the steps of the other examples in the present invention, and hence the description thereof will be omitted. In step 146, a life acceleration amount of each of the components at the temperature corresponding to the temperature detected by the temperature detector is acquired from the data table at address 5001 to address 50X9 stored in the nonvolatile memory. When there is no data completely coincident with the temperature detection value in the data at address 5001 to address 5009 stored in the nonvolatile memory, it is desirable that an approximate value of the temperature detection value is obtained by calculation of the following Expression 2. For example, when the temperature detection value is 10.0°C in component 1, J1A is calculated by the following Expression 2 by using the data of (DJ1) and (DJ2) respectively stores at address 5001 and address 5002 in the nonvolatile memory, and the data of (J11) and (J12) respectively stores at address 5011 and address 5012 in the nonvolatile memory. Then, the obtained J1A is stored in the volatile memory 1201.

$$ J1A = (J12 - J11) \times (DJ2 - DJ1) + J11 \qquad \text{... Expression 2} $$

Similarly, J2A to JXA are calculated and stored at address 1202 to address 1209 in the volatile memory.

In step 147, the life acceleration amounts J1A to J19 at the present temperature are respectively added to the present life acceleration amounts (integrated values) of LM1 to LM9 of component 1 to component 9 which are respectively stored at address 6101 to address 6109 in the nonvolatile memory, and then, the obtained values of LM1 to LM9 respectively are stored, as new present life acceleration amounts (integrated values) of component 1 to component 9, at address 6101 to address 6109 in the volatile memory. In step 148, it is determined whether or not each of the present life acceleration amounts (integrated values) of LM1 to LM9 exceeds each of LDG1 to LDG9 respectively stored at address 7101 to address 7109 in the nonvolatile memory. When each of the component life acceleration amounts (integrated values) exceeds each of component life determination values, the component life signal is outputted in step 149, and then, the process proceeds to step 151. When each of the component life acceleration amounts (integrated values) is less than each of component life determination values, the process proceeds as it is to step 151. In step 151, the counting of the timer is resumed, and then, the process returns to step 104.

The present invention is useful for estimation of the life of component, such as a capacitor, whose life is greatly changed by temperature. In the case of the capacitor, it is known that, when the temperature is increased by about 10°C, the life of the capacitor is halved. Therefore, it is advantageous that the life acceleration amounts are calculated from temperatures, and, based on the integrated value of the life acceleration amounts, the component life signal is outputted before the expiration of the life, so as to perform the maintenance.

It is desirable that the temperature gradient is taken into consideration in the life estimation. In this case, the life estimation can be more accurately performed by the addition of life expectancies of the components with use of the temperatures at the installation positions of the components while taking into consideration the temperature gradient between the temperature detector and each of the components.

That is, with the present invention, it is possible to provide the rotating electric machine assembly body configured such that the housing, on the outer periphery of which the cooling fins are formed, is directly used as a cooling section of the heat generating components, such as the inverter, and thereby, the number of components required for performing temperature control is reduced, and such that the electric motor and the inverter are further thermally integrated with each other, and thereby, the temperature control can be easily performed, and thereby the temperature of the power conversion device including the inverter, and the temperatures of various circuit boards, and further temperatures of noise filters and capacitors are integrally controlled, as a result of which the electric motor and each of the components can be protected from high temperature, and the operation of the electric motor can be continued as long as possible at the temperature close to the upper limit of the specification temperature.

In the above-described embodiments, the rotating electric machine assembly body for driving an outside installation pump, which assembly body is configured by a permanent-magnet-type rotating electric machine, is described. However, the present invention is not limited to this, and the rotating electric machine assembly body may be configured by the other type of rotating electric machine, and in this case, the same effect can be obtained.

REFERENCE SIGNS LIST

10 ...           Cover

| | |
|---|---|
| 20 ... | Cooling cover |
| 21 ... | Small opening |
| 58 ... | Centrifugal fan |
| 30 ... | Case for power conversion device |
| 31 ... | Power conversion device |
| 40 ... | Terminal box |
| 50 ... | Rotating electric machine (portion) |
| 51 ... | Housing |
| 52L, 52S ... | Cooling fin |
| 54 ... | Stator (armature) |
| 55 ... | Rotor |
| 56 ... | Rotary shaft (shaft) |
| 60 ... | Case for control & I/F board |
| 70 ... | Case for smoothing capacitor |
| H ... | Heat generating portion |
| B ... | Center section of armature |

**Claims**

1. A rotating electric machine assembly body comprising:

   a rotating electric machine (50) including

   a housing (51),
   a stator (54) attached to the housing,
   a rotator (55) fixed to a rotary shaft (56),
   a bearing supporting the rotary shaft (56), and
   end brackets to which the bearing is attached;

   a power conversion device (31) supplying a drive current to an armature of the rotating electric machine; and
   a control board controlling the rotating electric machine via the power conversion device (31), the power conversion device and the control board being arranged at an outer peripheral portion of the housing (51),
   wherein the power conversion device (31) includes a temperature detector in a region in which the power conversion device (31) and the housing (51) are in contact with each other, **characterised in that**
   when a temperature detected by the temperature detector is equal to or higher than a predetermined temperature, the control board lowers a frequency of AC power outputted from the power conversion device, and when a temperature detected by the temperature detector is less than a predetermined temperature, the control board increases a frequency of AC power outputted from the power conversion device to the specified frequency.

2. The rotating electric machine assembly body according to claim 1, comprising
   a cooling fan provided at an end bracket on an anti-load side of the rotating electric machine and rotationally driven by the rotary shaft of the rotating electric machine,
   **characterized in that**, in the state where the rotating electric machine is stopped, when the temperature detected by the temperature detector is higher than the predetermined temperature, the control board performs control to start operation of the rotating electric machine.

3. The rotating electric machine assembly body according to claim 1, comprising
   a first cooling fan provided at an end bracket on an anti-load side of the rotating electric machine and rotationally driven by the rotary shaft of the rotating electric machine, and
   a second cooling fan provided at a position different from the rotary shaft of the first cooling fan and rotationally driven,
   **characterized in that**, in the state where the rotating electric machine is operated, when the temperature detected by the temperature detector is higher than the predetermined temperature, the control board performs control to start operation of the second cooling fan.

4. The rotating electric machine assembly body according to claim 3, **characterized in that** the second cooling fan is provided at an end bracket on a load side or at a load side of the housing.

5. The rotating electric machine assembly body according to claim 1, **characterized in that**, when a present command speed is higher than the maximum speed allowable at the temperature detected by the temperature detector, the control board performs control to change the command speed.

6. The rotating electric machine assembly body according to claim 1, comprising a terminal box (40) provided at an outer periphery of the housing (51), **characterized in that** a noise filter is incorporated in the terminal box.

7. The rotating electric machine assembly body according to claim 1, **characterized in that** the housing has a planar section on which the power conversion device is arranged, and a thickness of the planar section is less than a thickness of the other portion of the housing.

8. The rotating electric machine assembly body according to claim 1, **characterized in that** the power conversion device is arranged so that, in the rotation axis direction of the housing, a central position of the housing is coincident with a central position of the armature of the rotating electric machine.

9. The rotating electric machine assembly body according to claim 1, **characterized in that** the control board performs control based on a temperature which is obtained from the temperature detected by the temperature detector while taking into consideration the temperature gradient of the housing.

10. The rotating electric machine assembly body according to claim 1, **characterized in that** the control board changes a reduction rate of the frequency of the outputted AC power according to the value of the temperature detected by the temperature detector.

11. The rotating electric machine assembly body according to claim 1, **characterized in that**, while the power conversion device is operated to lower the frequency of the outputted AC power, the control board outputs a signal indicating that degeneracy operation is performed.

12. The rotating electric machine assembly body according to claim 1, **characterized in that**, when the temperature detected by the temperature detector is higher that a second predetermined temperature higher than the predetermined temperature, the control board stops operation of the rotating electric machine.

13. The rotating electric machine assembly body according to claim 1, **characterized in that**, when a rotation speed of the rotating electric machine is less than a predetermined value, the control board stops operation of the rotating electric machine.

14. The rotating electric machine assembly body according to claim 1, **characterized in that** the control board integrates values based on temperatures detected by the temperature detector, and compares the integrated value with a life determination value of a component to perform life estimation of the component.

**Patentansprüche**

1. Elektrischer Rotationsmaschinenanordnungskörper, der Folgendes umfasst:

eine elektrische Rotationsmaschine (50), einschließlich

eines Gehäuses (51),
eines mit dem Gehäuse verbundenen Stators (54),
eines an einer Drehwelle (56) befestigten Rotators (55),
eines die Drehwelle (56) lagernden Lagers, und
Endhalterungen, an denen das Lager angebracht ist;

eine Leistungsumwandlungsvorrichtung (31), die einem Anker der elektrischen Rotationsmaschine einen Ansteuerstrom liefert; und
eine Steuerplatine, die die elektrische Rotationsmaschine über die Leistungsumwandlungsvorrichtung (31) steuert, wobei die Leistungsumwandlungsvorrichtung und die Steuerplatine an einem äußeren peripheren Abschnitt des Gehäuses (51) angeordnet sind,
wobei die Leistungsumwandlungsvorrichtung (31) einen Temperaturdetektor in einem Bereich, in dem die Leistungsumwandlungsvorrichtung (31) und das Gehäuse (51) miteinander in Kontakt stehen, beinhaltet, **dadurch gekennzeichnet, dass**, wenn eine durch den Temperaturdetektor detektierte Temperatur gleich oder höher als eine vorbestimmte Temperatur ist, die Steuerplatine eine Frequenz einer Wechselstromleistung, die von der Leistungsumwandlungsvorrichtung ausgegeben wird, senkt, und wenn eine durch den Temperaturdetektor detektierte Temperatur niedriger als eine vorbestimmte Temperatur ist, die Steuerplatine eine Frequenz einer Wechselstromleistung, die von der Leistungsumwandlungsvorrichtung ausgegeben wird, auf die spezifizierte Frequenz erhöht.

2. Elektrischer Rotationsmaschinenanordnungskörper nach Anspruch 1, umfassend einen Kühlungslüfter, der an einer Endhalterung an einer Gegen-Lastseite der elektrischen Rotationsmaschine bereitgestellt ist und von der Drehwelle der elektrischen Rotationsmaschine drehangetrieben wird, **dadurch gekennzeichnet, dass** in dem Zustand, in dem die elektrische Rotationsmaschine angehalten wird, wenn die durch den Temperaturdetektor detektierte Temperatur höher als eine vorbestimmte Temperatur ist, die Steuerplatine die Steuerung ausführt, um den Betrieb der elektrischen Rotationsmaschine zu starten.

3. Elektrischer Rotationsmaschinenanordnungskörper nach Anspruch 1, umfassend einen ersten Kühlungslüfter, der an einer Endhalterung an einer Gegen-Lastseite der elektrischen Rotationsmaschine bereitgestellt ist, und von der Drehwelle der elektrischen Rotationsmaschine drehangetrieben wird, und einen zweiten Kühlungslüfter, der an einer anderen Position als die Drehwelle des ersten Kühlungslüfters bereitgestellt ist und drehangetrieben wird, **dadurch gekennzeichnet, dass** in dem Zustand, in dem die elektrische Rotationsmaschine in Betrieb ist, wenn die von dem Temperaturdetektor detektierte Temperatur höher als die vorbestimmte Temperatur ist, die Steuerplatine die Steuerung ausführt, um den Betrieb des zweiten Kühlungslüfters zu starten.

4. Elektrischer Rotationsmaschinenanordnungskörper nach Anspruch 3, **dadurch gekennzeichnet, dass** der zweite Kühlungslüfter an einer Endhalterung an einer Lastseite oder an einer Lastseite des Gehäuses bereitgestellt ist.

5. Elektrischer Rotationsmaschinenanordnungskörper nach Anspruch 1, **dadurch gekennzeichnet, dass**, wenn eine aktuelle Solldrehzahl höher als die höchstzulässige Drehzahl bei der durch den Temperaturdetektor detektierten Temperatur ist, die Steuerplatine eine Steuerung zum Ändern der Solldrehzahl ausführt.

6. Elektrischer Rotationsmaschinenanordnungskörper nach Anspruch 1, umfassend einen Anschlusskasten (40), der an einer Außenseite des Gehäuses (51) bereitgestellt ist, **dadurch gekennzeichnet, dass** in dem Anschlusskasten ein Rauschfilter eingebaut ist.

7. Elektrischer Rotationsmaschinenanordnungskörper nach Anspruch 1, **dadurch gekennzeichnet, dass** das Gehäuse einen planaren Abschnitt aufweist, an dem die Leistungsumwandlungsvorrichtung angeordnet ist, und eine Dicke des planaren Abschnitts geringer als eine Dicke des anderen Abschnitts des Gehäuses ist.

8. Elektrischer Rotationsmaschinenanordnungskörper nach Anspruch 1, **dadurch gekennzeichnet, dass** die Leistungsumwandlungsvorrichtung so angeordnet ist, dass in der Drehachsenrichtung des Gehäuses eine Mittelposition des Gehäuses mit einer Mittelposition des Ankers der elektrischen Rotationsmaschine zusammenfällt.

9. Elektrischer Rotationsmaschinenanordnungskörper nach Anspruch 1, **dadurch gekennzeichnet, dass** die Steuerplatine eine Steuerung auf der Basis einer Temperatur, die von der durch den Temperaturdetektor detektierten Temperatur erhalten wird, ausführt, wobei der Temperaturgradient des Gehäuses berücksichtigt wird.

10. Elektrischer Rotationsmaschinenanordnungskörper nach Anspruch 1, **dadurch gekennzeichnet, dass** die Steuerplatine eine Verringerungsrate der Frequenz der ausgegebenen Wechselstromleistung gemäß dem Wert der durch den Temperaturdetektor detektierten Temperatur ändert.

11. Elektrischer Rotationsmaschinenanordnungskörper nach Anspruch 1, **dadurch gekennzeichnet, dass**, während die Leistungsumwandlungsvorrichtung betrieben wird, um die Frequenz der ausgegebenen Wechselstromleistung zu senken, die Steuerplatine ein Signal ausgibt, das anzeigt, dass ein Entartungsbetrieb ausgeführt wird.

12. Elektrischer Rotationsmaschinenanordnungskörper nach Anspruch 1, **dadurch gekennzeichnet, dass**, wenn die durch den Temperaturdetektor detektierte Temperatur höher als eine zweite vorbestimmte Temperatur ist, die höher als die vorbestimmte Temperatur ist, die Steuerplatine den Betrieb der elektrischen Rotationsmaschine anhält.

**13.** Elektrischer Rotationsmaschinenanordnungskörper nach Anspruch 1, **dadurch gekennzeichnet, dass**, wenn eine Drehzahl der elektrischen Rotationsmaschine geringer als ein vorbestimmter Wert ist, die Steuerplatine den Betrieb der elektrischen Rotationsmaschine anhält.

**14.** Elektrischer Rotationsmaschinenanordnungskörper nach Anspruch 1, **dadurch gekennzeichnet, dass** die Steuerplatine Werte auf der Basis von durch den Temperaturdetektor detektierten Temperaturen integriert und den integrierten Wert mit einem Lebensdauerbestimmungswert eines Bauteils vergleicht, um eine Schätzung der Lebensdauer eines Bestandteils durchzuführen.

**Revendications**

**1.** Corps d'ensemble de machine électrique rotative comprenant :

une machine électrique rotative (50) comprenant

un boîtier (51),
un stator (54) attaché au boîtier,
un rotateur (55) fixé sur un arbre rotatif (56),
un palier supportant l'arbre rotatif (56), et
des supports d'extrémité auxquels le palier est attaché ;

un dispositif de conversion de puissance (31) alimentant un courant d'attaque dans une armature de la machine électrique rotative ; et
un tableau de commande commandant la machine électrique rotative via le dispositif de conversion de puissance (31), le dispositif de conversion de puissance et le tableau de commande étant disposés au niveau d'une partie périphérique extérieure du boîtier (51),
dans lequel le dispositif de conversion de puissance (31) comprend un détecteur de température dans une région dans laquelle le dispositif de conversion de puissance (31) et le boîtier (51) sont en contact l'un avec l'autre, **caractérisé en ce que**
lorsqu'une température détectée par le détecteur de température est égale ou supérieure à une température prédéterminée, le tableau de commande abaisse une fréquence de puissance AC délivrée en sortie par le dispositif de conversion de puissance, et lorsqu'une température détectée par le détecteur de température est inférieure à une température prédéterminée, le tableau de commande augmente une fréquence de puissance AC délivrée en sortie par le dispositif de conversion de puissance jusqu'à la fréquence spécifiée.

**2.** Corps d'ensemble de machine électrique rotative selon la revendication 1, comprenant
un ventilateur de refroidissement agencé au niveau d'un support d'extrémité sur un côté anti-charge de la machine électrique rotative et entraîné en rotation par l'arbre rotatif de la machine électrique rotative,
**caractérisé en ce que**, dans l'état où la machine électrique rotative est arrêtée, lorsque la température détectée par le détecteur de température est supérieure à la température prédéterminée, le tableau de commande effectue une commande pour démarrer un fonctionnement de la machine électrique rotative.

**3.** Corps d'ensemble de machine électrique rotative selon la revendication 1, comprenant
un premier ventilateur de refroidissement agencé au niveau d'un support d'extrémité sur un côté anti-charge de la machine électrique rotative et entraîné en rotation par l'arbre rotatif de la machine électrique rotative, et
un second ventilateur de refroidissement agencé au niveau d'une position différente de l'arbre rotatif du premier ventilateur de refroidissement et entraîné en rotation,
**caractérisé en ce que**, dans l'état où la machine électrique rotative fonctionne, lorsque la température détectée par le détecteur de température est supérieure à la température prédéterminée, le tableau de commande effectue une commande pour démarrer un fonctionnement du second ventilateur de refroidissement.

**4.** Corps d'ensemble de machine électrique rotative selon la revendication 3, **caractérisé en ce que** le second ventilateur de refroidissement est agencé au niveau d'un support d'extrémité sur un côté charge ou au niveau d'un côté charge du boîtier.

**5.** Corps d'ensemble de machine électrique rotative selon la revendication 1, **caractérisé en ce que**, lorsqu'une vitesse d'instruction actuelle est supérieure à la vitesse maximale admissible à la température détectée par le détecteur de température, le tableau de commande effectue une commande pour modifier la vitesse d'instruction.

6. Corps d'ensemble de machine électrique rotative selon la revendication 1, comprenant une boîte à bornes (40) agencée au niveau d'une périphérie extérieure du boîtier (51), **caractérisé en ce qu'**un filtre anti-bruit est incorporé dans la boîte à bornes.

7. Corps d'ensemble de machine électrique rotative selon la revendication 1, **caractérisé en ce que** le boîtier a une section plane sur laquelle le dispositif de conversion de puissance est disposé, et une épaisseur de la section plane est inférieure à une épaisseur de l'autre partie du boîtier.

8. Corps d'ensemble de machine électrique rotative selon la revendication 1, **caractérisé en ce que** le dispositif de conversion de puissance est agencé de sorte que, dans la direction d'axe de rotation du boîtier, une position centrale du boîtier coïncide avec une position centrale de l'armature de la machine électrique rotative.

9. Corps d'ensemble de machine électrique rotative selon la revendication 1, **caractérisé en ce que** le tableau de commande effectue une commande sur la base d'une température qui est obtenue à partir de la température détectée par le détecteur de température tout en prenant en compte le gradient de température du boîtier.

10. Corps d'ensemble de machine électrique rotative selon la revendication 1, **caractérisé en ce que** le tableau de commande modifie un taux de réduction de la fréquence de la puissance AC délivrée en sortie en fonction de la valeur de la température détectée par le détecteur de température.

11. Corps d'ensemble de machine électrique rotative selon la revendication 1, **caractérisé en ce que**, alors que le dispositif de conversion de puissance est actionné pour abaisser la fréquence de la puissance AC délivrée en sortie, le tableau de commande délivre en sortie un signal indiquant qu'une opération de dégénérescence est effectuée.

12. Corps d'ensemble de machine électrique rotative selon la revendication 1, **caractérisé en ce que**, lorsque la température détectée par le détecteur de température est supérieure à une seconde température prédéterminée supérieure à la température prédéterminée, le tableau de commande arrête le fonctionnement de la machine électrique rotative.

13. Corps d'ensemble de machine électrique rotative selon la revendication 1, **caractérisé en ce que**, lorsqu'une vitesse de rotation de la machine électrique rotative est inférieure à une valeur prédéterminée, le tableau de commande arrête le fonctionnement de la machine électrique rotative.

14. Corps d'ensemble de machine électrique rotative selon la revendication 1, **caractérisé en ce que** le tableau de commande intègre des valeurs sur la base de températures détectées par le détecteur de température, et compare la valeur intégrée à une valeur de détermination de durée de vie d'un composant pour effectuer une estimation de durée de vie du composant.

EP 3 151 394 B1

# FIG.1

15

# FIG.2

EP 3 151 394 B1

# FIG.3

# FIG.4

# FIG.5

CONTENTS OF VOLATILE MEMORY

| NUMBER | SYMBOL | STORED VALUE | CONTENT |
|---|---|---|---|
| 1 0 0 0 | H z i | 6 0． 0 | INITIAL COMMAND SPEED (COMMAND FREQUENCY AT THE TIME OF START OF OPERATION) |
| 1 0 0 1 | H z N | 5 8． 0 | PRESENT COMMAND SPEED (PRESENT COMMAND FREQUENCY) |
| 1 0 0 2 | H z D | 2． 0 | COMMAND SPEED SUBTRACTION AMOUNT (AT THE TIME OF TEMPERATURE RISE) |
| 1 0 0 3 | H z A | 2． 0 | COMMAND SPEED ADDITION AMOUNT (AT THE TIME OF TEMPERATURE DROP) |
| 1 0 0 4 | T N 1 | 2 5． 0 | REMAINING TIME OF TIMER1 |
| 1 0 0 5 | T D G 1 | 9 0． 0 | TEMPERATURE DETERMINATION VALUE 1 |
| 1 0 0 6 | T D G 2 | 1 0 0． 0 | TEMPERATURE DETERMINATION VALUE 2 |
| 1 0 0 7 | T D G 3 | 8 0． 0 | TEMPERATURE DETERMINATION VALUE 3 |
| 1 1 0 0 | L M A | 1 3 5 | LIFE ACCELERATION AMOUNT |
| 1 1 0 1 | D T X | 9 2． 5 | PRESENT TEMPERATURE DETECTION VALUE |
| 1 1 0 2 | D H X | 5 7． 5 | PRESENT ALLOWABLE MAXIMUM OUTPUT SPEED |
| 1 2 0 1 | J 1 A | 5 | LIFE ADDITION AMOUNT OF COMPONENT 1 AT THE TIME OF PRESENT TEMPERATURE |
| 1 2 0 2 | J 2 A | 1 0 | LIFE ADDITION AMOUNT OF COMPONENT 2 AT THE TIME OF PRESENT TEMPERATURE |
| ... | ... | ... | ... |
| 1 2 0 9 | J 9 A | 1 5 | LIFE ADDITION AMOUNT OF COMPONENT 9 AT THE TIME OF PRESENT TEMPERATURE |

CONTENTS OF NONVOLATILE MEMORY

| NUMBER | SYMBOL | STORED VALUE | CONTENT |
|---|---|---|---|
| 2 0 0 1 | T M 1 | 3 0． 0 | SET VALUE OF TIMER 1 (PERIOD OF TEMPERATURE DETERMINATION) |
| 2 0 0 2 | S L T | 1 | SELECTION OF TEMPERATURE GRADIENT CALCULATION (0:ABSENT, 1:PRESENT) |
| 2 0 0 3 | T G | 0． 5 | TEMPERATURE GRADIENT COEFFICIENT |
| 2 0 0 4 | D S | 1 0． 0 | DISTANCE BETWEEN MEASUREMENT POINT AND COMPONENT |
| 2 0 0 5 | T X | 5． 0 | TEMPERATURE GRADIENT AMOUNT |
| 2 0 0 6 | T 1 | 9 5． 0 | PROTECTION TEMPERATURE REFERENCE VALUE 1 |
| 2 0 0 7 | T 2 | 1 1 5． 0 | PROTECTION TEMPERATURE REFERENCE VALUE 2 |
| 2 0 0 8 | T 3 | 8 5． 0 | PROTECTION TEMPERATURE REFERENCE VALUE 3 |
| 2 0 0 9 | H z D G | 3 0． 0 | ELECTRIC MOTOR STOP DETERMINATION SPEED |
| 3 0 0 1 | S L S | 1 | OUTPUT PRESENCE/ABSENCE SELECTION OF DEGENERACY OPERATION SIGNAL (0:SIGNAL ABSENT, 1:SIGNAL PRESENT) |
| 3 0 0 2 | S L P | 1 | OUTPUT PRESENCE/ABSENCE SELECTION OF DEGENERACY STOP SIGNAL (0:SIGNAL ABSENT, 1:SIGNAL PRESENT) |

# FIG.6

CONTENTS OF NONVOLATILE MEMORY (CONTINUATION)

| NUMBER | SYMBOL | STORED VALUE | CONTENT |
|---|---|---|---|
| 4 0 0 1 | D T 1 | 9 0. 0 | PROTECTION TEMPERATURE 1 |
| 4 0 0 2 | D T 2 | 9 5. 0 | PROTECTION TEMPERATURE 2 |
| ... | ... | ... | ... |
| 4 0 0 9 | D T 9 | 1 3 0. 0 | PROTECTION TEMPERATURE 9 |
| 4 0 1 1 | D H 1 | 6 0. 0 | MAXIMUM OUTPUT SPEED 1 AT PROTECTION TEMPERATURE 1 |
| 4 0 1 2 | D H 2 | 5 5. 0 | MAXIMUM OUTPUT SPEED 2 AT PROTECTION TEMPERATURE 2 |
| ... | ... | ... | ... |
| 4 0 1 9 | D H 9 | 2 0. 0 | MAXIMUM OUTPUT SPEED 9 AT PROTECTION TEMPERATURE 9 |
| 5 0 0 1 | D J 1 | 0. 0 | LIFE DETERMINATION TEMPERATURE 1 |
| 5 0 0 2 | D J 2 | 2 0. 0 | LIFE DETERMINATION TEMPERATURE 2 |
| ... | ... | ... | ... |
| 5 0 0 9 | D J 9 | 1 6 0. 0 | LIFE DETERMINATION TEMPERATURE 9 |
| 5 0 1 1 | J 1 1 | 5. 0 | LIFE ACCELERATION AMOUNT 1 OF COMPONENT 1 AT LIFE DETERMINATION TEMPERATURE 1 |
| 5 0 1 2 | J 1 2 | 1 0. 0 | LIFE ACCELERATION AMOUNT 2 OF COMPONENT 1 AT LIFE DETERMINATION TEMPERATURE 2 |
| ... | ... | ... | ... |
| 5 0 1 9 | J 1 9 | 1 2 8 0. 0 | LIFE ACCELERATION AMOUNT 9 OF COMPONENT 1 AT LIFE DETERMINATION TEMPERATURE 9 |
| 5 0 2 1 | J 2 1 | 1 0. 0 | LIFE ACCELERATION AMOUNT 1 OF COMPONENT 2 AT LIFE DETERMINATION TEMPERATURE 1 |
| 5 0 2 2 | J 2 2 | 1 0. 0 | LIFE ACCELERATION AMOUNT 2 OF COMPONENT 2 AT LIFE DETERMINATION TEMPERATURE 2 |
| ... | ... | ... | ... |
| 5 0 2 9 | J 2 9 | 1 0. 0 | LIFE ACCELERATION AMOUNT 9 OF COMPONENT 2 AT LIFE DETERMINATION TEMPERATURE 9 |
| ... | ... | ... | ... |
| 5 0 X 1 | J 9 1 | 1 0. 0 | LIFE ACCELERATION AMOUNT 1 OF COMPONENT 9 AT LIFE DETERMINATION TEMPERATURE 1 |
| 5 0 X 2 | J 9 2 | 2 0. 0 | LIFE ACCELERATION AMOUNT 2 OF COMPONENT 9 AT LIFE DETERMINATION TEMPERATURE 2 |
| ... | ... | ... | ... |
| 5 0 X 9 | J 9 9 | 9 0. 0 | LIFE ACCELERATION AMOUNT 9 OF COMPONENT 9 AT LIFE DETERMINATION TEMPERATURE 9 |
| 6 1 0 1 | L M 1 | 1 3 5 | PRESENT LIFE ADDITION AMOUNT (INTEGRATED VALUE) OF COMPONENT 1 |
| 6 1 0 2 | L M 2 | 3 0 0 | PRESENT LIFE ADDITION AMOUNT (INTEGRATED VALUE) OF COMPONENT 2 |
| ... | ... | ... | ... |
| 6 1 0 X | L M 9 | 2 7 0 | PRESENT LIFE ADDITION AMOUNT (INTEGRATED VALUE) OF COMPONENT 9 |
| 7 1 0 1 | L D G 1 | 1 2 0 0 0 | PRESENT LIFE DETERMINATION VALUE OF COMPONENT 1 |
| 7 1 0 2 | L D G 2 | 3 5 0 0 | PRESENT LIFE DETERMINATION VALUE OF COMPONENT 2 |
| ... | ... | ... | ... |
| 7 1 0 X | L D G 9 | 8 0 0 0 0 | PRESENT LIFE DETERMINATION VALUE OF COMPONENT 9 |

# FIG.7

101
START OPERATION

102
DETERMINATION VALUE TDG CONFIRMATION PROCESS

103
START COUNTING OF TIMER

104
REACHING SPECIFIED SPEED

111
COUNTING OF TIMER IS ENDED? — YES

NO

112
DETECTION TEMPERATURE IS LESS THAN TDG 1? — NO

YES

132
COMMAND SPEED ADDITION PROCESS

122
COMMAND SPEED SUBTRACTION PROCESS

151
RESTART COUNTING OF TIMER

# FIG.8

202 TEMPERATURE GRADIENT
CALCULATION IS SELECTED

NO

YES

210 OBTAIN TX BY MUTIPLING GRADIENT
COEFFICIENT TG AND DISTANCE DS

211 SET T1-TX AS TDG1

212 SET T2-TX AS TDG2

213 SET T3-TX AS TDG3

221 SET T1 AS TDG1

222 SET T2 AS TDG2

223 SET T3 AS TDG3

# FIG.9

301 SUBSTRACT HzD FROM PRESENT COMMAND SPEED

302 OUTPUT OF DEGENERACY
OPERATION SIGNAL IS SELECTED?

NO

YES

303 DEGENERACY OPERATION SIGNAL IS OUTPUTTED

304 DEGENERACY OPERATION SIGNAL IS NOT OUTPUTTED

22

# FIG.10

401
ADD HzA TO PRESENT COMMAND SPEED

402
ADDED COMMAND SPEED COINCIDES WITH INITIAL COMMAND SPEED?

NO

YES

403
DEGENERACY OPERATION SIGNAL IS OUTPUTTED?

NO

YES

404
STOP DEGENERACY OPERATION SIGNAL

# FIG.11

START OPERATION

DETERMINATION VALUE TDG CONFIRMATION PROCESS

START COUNTING OF TIMER

REACHING SPECIFIED SPEED

COUNTING OF TIMER IS ENDED? — YES

NO

DETECTION TEMPERATURE IS LESS THAN TDG 1? — NO

YES

DETECTION TEMPERATURE IS LESS THAN TDG3? — NO

DETECTION TEMPERATURE IS LESS THAN TDG2? — NO

YES

COMMAND SPEED ADDITION PROCESS

YES

COMMAND SPEED SUBTRACTION PROCESS

COMMAND SPEED IS NOT LESS THAN HzDG? — NO

YES

STOP OPPERATION OF ELECTRIC MOTOR

RESTART COUNTING OF TIMER

OUTPUT ELECTRIC MOTOR STOP SIGNAL

# FIG.12

101 START OPERATION

102 DETERMINATION VALUE TDG CONFIRMATION PROCESS

103 START COUNTING OF TIMER

104 REACHING SPECIFIED SPEED

111 COUNTING OF TIMER IS ENDED? — YES

NO

112 DETECTION TEMPERATURE IS LESS THAN TDG1? — NO

YES

131 DETECTION TEMPERATURE IS LESS THAN TDG3? — NO

121 DETECTION TEMPERATURE IS LESS THAN TDG2? — NO

YES

YES

132 COMMAND SPEED ADDITION PROCESS

122 COMMAND SPEED SUBTRACTION PROCESS

126 OPERATE SECOND AIR COOLING FAN

133 STOP SECOND AIR COOLING FAN

151 RESTARE COUNTING OF TIMER

# FIG.13

```
101 ┌─────────────────────────────────────┐
    │          START OPERATION            │
    └─────────────────────────────────────┘
                      │
                      ▼
102 ┌─────────────────────────────────────┐
    │ DETERMINATION VALUE TDG CONFIRMATION PROCESS │
    └─────────────────────────────────────┘
                      │
                      ▼
103 ┌─────────────────────────────────────┐
    │       START COUNTING OF TIMER       │
    └─────────────────────────────────────┘
                      │
                      ▼
104 ┌─────────────────────────────────────┐
    │       REACHING SPECIFIED SPEED      │
    └─────────────────────────────────────┘
                      │
                      ▼
111        ◇ COUNTING OF TIMER IS ENDED? ◇ ─── YES
                      │
                      NO

141 ┌─────────────────────────────────────┐
    │   ACQUIRE ALLOWABLE OUTPUT MAXIMUM   │
    │   SPEED CORRESPONDING TO PRESENT     │
    │   TEMPERATURE FROM DATA TABLE        │
    └─────────────────────────────────────┘
                      │
                      ▼
142     ◇ PRESENT COMMAND SPEED IS NOT LESS THAN ALLOWABLE
          OUTPUT MAXIMUM SPEED? ◇ ─── NO
                      │
                     YES

144     ◇ INITIAL COMMAND SPEED IS MORE THAN ALLOWABLE OUTPUT
          MAXIMUM SPEED? ◇ ─── NO
                      │
                     YES

143 ┌─────────────────────────┐   145 ┌─────────────────────────┐
    │ SET COMMAND SPEED AS     │       │ SET COMMAND SPEED AS     │
    │ ALLOWABLE OUTPUT MAXIMUM │       │ ALLOWABLE OUTPUT MAXIMUM │
    │ SPEED                    │       │ SPEED                    │
    └─────────────────────────┘       └─────────────────────────┘

151 ┌─────────────────────────────────────┐
    │       RESTART COUNTING OF TIMER      │
    └─────────────────────────────────────┘
```

# FIG.14

START OPERATION

DETERMINATION VALUE TDG CONFIRMATION PROCESS

START COUNTING OF TIMER

REACHING SPECIFIED SPEED

COUNTING OF TIMER IS ENDED?

YES

NO

ACQUIRE LIFE ACCELERATION AMOUNT CORRESPONDING TO PRESENT TEMPERATURE FROM DATA TABLE

ADD COMPONENT ACCELERATION AMOUNT TO PRESENT COMPONENT ADDITION VALUE (INTEGRATED VALUE)

PRESENT COMPONENT LIFE EXCEEDS LIFE DERERMINATION VALUE LDG?

NO

YES

OUTPUT COMPONENT LIFE SIGNAL

RESTARE COUNTING OF TIMER

# FIG.15

TG (TEMPERATURE GRADIENT COEFFICIENT)
DEGREE OF HEAT TRANSFER DETERMINED
BY COMPONENT MATERIAL

CENTER OF HEAT
GENERATION PORTION

MEASUREMENT POINT
(TEMPERATURE DETECTION
SECTION)

DISTANCE DS

TEMPERATURE
DECREASE
AMOUNT

INCLINATION : TG TEMPERATURE
GRADIENT
COEFFICIENT

0

DISTANCE DS

# FIG.16

**EP 3 151 394 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6178442 A
- JP 9009684 A
- JP 2008042956 A
- JP H1169836 A